# EUROPÄISCHE PATENTANMELDUNG

(11) **EP 0 695 508 A2**
(43) Veröffentlichungstag der Anmeldung: **07.02.1996**
(21) Anmeldenummer: 95250134.4
(22) Anmeldetag: 07.06.1995
(51) Int. Cl.: A23K 1/18

(54) **Katzenfutterdressing**

(30) Priorität: 04.08.1994 DE 4428852
(71) Anmelder: Von Burgsdorff, Heike, D-24232 Dobersdorf (DE)
(72) Erfinder: Von Burgsdorff, Heike, D-24232 Dobersdorf (DE)
(74) Vertreter: Wablat, Wolfgang, Dr.Dr.

(57) **Zusammenfassung**

Die vorliegende Erfindung betrifft ein Katzenfutterdressing, ein Verfahren zu seiner Herstellung sowie seine Verwendung zur geschmacklichen Verfeinerung von Katzenfutter und sonstigen Nahrungsmitteln.

Das erfindungsgemäße Katzenfutterdressing enthält 5 bis 20 Gew.-% Rohproteine, 2 bis 5 Gew.-% zuckerhaltige Nährstoffe, 2 bis 10 Gew-% Speiseöle mit einem hohen Linolsäuregehalt, 0,5 bis 1,5 Gew.-% Geschmacksstoffe und/oder Aromen, 0,1 bis 5 Gew.-% Mineralstoffe und/oder Spurenelemente, 5000 bis 25000 IE Vitamin A und D₃ pro kg Dressing, 0,004 bis 0,2 Gew.-% weitere Vitamine, 0,5 bis 5 Gew.-% eines 5 bis 80%igen Extraktes aus Valeria officinalis, 0,05 bis 0,5 Gew.-% Taurin, 0,1 bis 5 Gew.-% Konservierungsstoffe, 0,01 bis 0,05 Gew.-% Antioxidantien und 47,750 bis 89,736 Gew.-% Wasser.

## Beschreibung

Die vorliegende Erfindung betrifft ein Katzenfutterdressing, ein Verfahren zu seiner Herstellung sowie seine Verwendung zur geschmacklichen Verfeinerung von Katzenfutter und sonstigen Nahrungsmitteln.

Demgegenüber stehen handelsübliche Tierfuttersorten. Unter handelsüblichem Tierfutter wird im allgemeinen übliches Futter für vorwiegend fleischfressende Tiere, bevorzugt für Hunde und Katzen, verstanden. Insbesondere handelt es sich um handelsübliches Tierfutter auf pflanzlicher und/oder tierischer Basis, das in trockener oder halbfeuchter Form oder als Naßfutter, beispielsweise als Konserve, verwendet wird. Die trockenen Futtermittel, wie z.B. Kügelchen oder Kuchen, sind im allgemeinen weniger gefragt als die halbfeuchten und feuchten, welche sich mehr der Form und dem Aussehen derjenigen Futtermittel nähern, die die natürliche Quelle eines Tierfutters bilden.

Die halbfeuchten Futtermittel sind an sich über Jahre haltbar. Vielfach sind sie aber nicht langzeitig haltbar, da sie in der Regel, um Kosten zu sparen, nur in Papierpackungen, Säcken oder ähnlichen Behältnissen mit mehr oder weniger guter Abdichtung verpackt sind.

Die feuchten Futtermittel sind die eigentlichen Konserven. Sie müssen sterilisiert, in dichten Behältern verpackt und bei 125°C eine längere Zeit erhitzt werden.

Die feuchten Futtermittel werden in der Regel als Kosthappen angeboten und bestehen aus mehlhaltigen Stoffen, Eingeweiden, Mineralsalzen, Gemüsen und Wasser. Diese Bestandteile sind in solchen Verhältnissen miteinander vermischt, daß dem Tier ein Futter zur Verfügung gestellt wird, das alle Nährbestandteile für ein richtiges Futter enthält. Diesen Futtermitteln können sonstige konzentrierte Nährstoffe zugeführt werden.

Der Nachteil dieses "vollwertigen" Tierfutters besteht in seinen sehr hohen Anschaffungskosten, was wiederum die Verbraucherbeliebtheit des Futters stark herabsetzt.

Aufgabe der Erfindung war es daher, ein Futterdressing zur Verfügung zu stellen, das sich sehr gut als Beimischung von Essensresten sowie billigen bzw. minderen Tierfuttersorten eignet, so daß der Tierhalter keine teuren Markenprodukte kaufen muß, um seinem Tier eine gesunde und schmackhafte Futterration zu verabreichen.

Gegenstand der Erfindung ist ein Katzenfutterdressing, welches sich dadurch auszeichnet, daß es 5 bis 20 Gew.-% Rohpro-teine, 2 bis 5 Gew.-% zuckerhaltige Nährstoffe, 2 bis 10 Gew-% Speiseöle mit einem hohen Linolsäuregehalt, 0,5 bis 1,5 Gew.-% Geschmacksstoffe und/oder Aromen, 0,1 bis 5 Gew.-% Mineralstoffe und/oder Spurenelemente, 5000 bis 25000 IE Vitamin A und D₃ pro kg Dressing, 0,004 bis 0,2 Gew.-% weitere Vitamine, 0,5 bis 5 Gew.-% eines 5 bis 80%igen Extraktes aus Valeria officinalis, 0,05 bis 0,5 Gew.-% Taurin, 0,1 bis 5 Gew.-% Konservierungsstoffe, 0,01 bis 0,05 Gew.-% Antioxidantien und 47,750 bis 89,736 Gew.-% Wasser enthält.

Eine besonders bevorzugte Ausführungsform des erfindungsgemäßen Katzenfutterdressings zeichnet sich dadurch aus, daß es 13,59 Gew.-% Rohproteine, 4,34 Gew.-% zuckerhaltige Nährstoffe, 7,23 Gew.-% Speiseöle mit einem hohen Linolsäuregehalt, 0,72 Gew-% Geschmacksstoffe und/oder Aromen, 0,22 Gew-% Mineralstoffe und/oder Spurenelemente, 13300 IE Vitamin A pro kg Dressing, 222 IE Vitamin D₃ pro kg Dressing, 0,007 Gew.-5 weitere Vitamine, 2,5 Gew.-% eines 60%igen alkoholischen Extraktes aus Valeria officinalis, 0,1 Gew.-% Taurin, 5 Gew.-% Konservierungsstoffe, 0,015 Gew.-% Antioxidanten und 66,278 Gew.-% Wasser enthält.

Die Rohproteine sind in Form von Mehlen und/oder Pulvern und/oder Schroten und/oder Flüssigkeiten enthalten. So werden z.B. Fleisch- und Tierkörpermehle, Blutmehle, Blute, Fischmehle, Sojamehle Magermilchpulver, Casein, Gelatinen, Eipulver, Nußmehle, Extrakte aus Maisquellwässern und Katoffelkochwässern, Federmehle, Hornmehle, Knochenfuttermehle, Geflügelabfallmehle, Grieben, Fleischknochenmehle, Futterknochenschrote, Tierlebermehle, Fischlebermehle, Süß- und Sauermolkenpulver, getoastete Extraktionsschrote von Ölfrüchten, Mehle von proteinreichen Hülsenfrüchten wie Erbsen, Bohnen, Linsen etc., mikrobielle Biomassen aus Saccharomyces cerevisiae und Candida utilis als Trockenpulver, Brautrebermehle und Fischproteinkonzentrate eingesetzt.

Eine bevorzugte Zusammensetzung des erfindungsgemäßen Katzenfutterdressings enthält als Rohproteine Gelatine, Fleischgriebenmehl und Fischmehl.

Als zuckerhaltige Nährstoffe werden Sirupe und/oder andere halbflüssige, wasserlösliche Hexosen bzw. Disaccharide aus Hexosen ohne oder mit geringem Galactoseanteil und/oder Rohr- und Speisezucker eingesetzt. Vor allem finden z.B. Rüben- und Rohrzuckersirupe, Melassen, Malzsirupe, Malzextrakte, Kräutersirupe wie Fenchelsirup, Fruchtsirupe aus Fruchtsäften, Sirupe aus zuckerhaltigen Pflanzen wie Ahorn- und Dattelsirupe, Stärkesirupprodukte der hydrolytischen Spaltung von Stärken, Bienenhonige, Kunsthonige, Marmeladen und Fruchtmuse, Konfitüren, Gelees, Ablaufsirupe bei der Zuckergewinnung sowie Flüssigzucker durch Auflösung von Mono- und Disacchariden in Wasser Verwendung.

Die Futterakzeptanz wir erheblich gefördert durch die ausgewogenenen Zusätze von Saccharose (Rübensirup etc.) und den Gehalt an Extrakten von Valeria officinalis in den Dressings. Der in den erfindungsgemäßen Dressings gegebene, hohe Wassergehalt potenziert die Akzeptanzwirkung der genannten Stoffe.

Die erfindungsgemäß eingesetzten Speiseöle weisen einen hohen Gehalt an essentiellen, ungesättigten Fettsäuren und geringe Anteile an langkettigen und mittelkettigen Fettsäuren auf. Der Linolsäuregehalt der Speieseöle liegt zwischen 3 bis 6 Gew-%.

Als Speiseöle werden insbesonders Öle aus Pflanzensamen oder Ölfrüchten wie Lein-, Raps-, Sonnenblumen-, Baumwollsamen-, Reiskleie-, Mais-, Sesam-, Aprikosenkern-, Oliven- oder Nußöle sowie tierische Öle oder halbfeste Fette wie Fischöle, Leberöle, Waltrane, Gänse-, Enten- und Schweineschmalz eingesetzt.

Tiere, insbesondere Haustiere, bevorzugen bestimmte Nahrungsmittel. Das Aroma spielt hierbei eine ausschlaggebende Rolle. Aus diesem Grunde kommt der Aromatisierung von Tierfutter eine besondere Bedeutung zu.

Die im erfindungsgemäßen Katzenfutterdressing eingesetzten Geschmacksstoffe und/oder Aromen, die die Futterakzeptanz der Katze betonen, enthalten Glutaminsäure. Als Aromen werden vor allem pulverförmige, flüssig-ölige oder pastöse, handelsübliche Tierfutteraromen und als Geschmacksstoffe dickflüssige Fleischfonds und Brühsuppenkonzentrate mit Geschmacksnoten wie beispielsweise Hamspice, Geflügel, Lamm, Kaninchen, Fisch wie Lachs, Hering usw. und Fleisch wie Wild, Innereien, Rind usw. eingesetzt.

Die erfindungsgemäß eingesetzten Mineralstoffe und/oder Spurenelemente sind in Form löslicher und/oder unlöslicher Salze im Katzenfutterdressing enthalten. Die Mengen der einzelnen Bestandteile sind abhängig von den physiologischen Erfordernissen. So besteht ein enger Zusammenhang zwischen dem Tagesbedarf an Rohprotein/Kg Katze und den benötigten Mengen an Mineralstoffen und/oder Spurenelementen. Diese physiologische Beziehung ist bei der Zusammensetzung des Katzenfutterdressings bereits berücksichtigt. Erfindungsgemäß enthalten die Dressings 0,1 bis 5 Gew.-% anorganische Salze, einzeln zugesetzt, als vorgefertigte Spezialmischungen oder aus Mischungen von Mineralsalzen, Spurenelementen und Vitaminen in Form sogenannter "Praemixe".

Die Zudosierung der Salze ist auch vom natürlichen Gehalt derselben in den Nährstoffen, hauptsächlich in den Rohproteinquellen, abhängig. Werden z.B. Fleisch- und Blutmehle als Rohproteinquellen verwendet, ist ein Zusatz von Fe-Salzen nicht erforderlich. Beim Einsatz anderer Rohproteinquellen ist dagegen ein Zusatz von Fe-Salzen notwendig.

Durch den Gehalt an Gelatine und Linolsäure stellt das erfindungsgemäße Katzenfutterdressing eine Prophylaxe gegen vorzeitige Verschleißerscheinungen des Stütz- und Bandapparates (Knochen, Gelenke, Sehnen) der Katze dar. Ferner wird das Wachstum und die Konsistenz der Krallen und des Haarkleides positiv beeinflußt, die Tiere bekommen ein glänzendes Fell.

Der Gehalt an Taurin wirkt vorbeugend gegen Erkrankungen der Augen und des Herzens.

Der hohe Wassergehalt des erfindungsgemäßen Katzenfutterdressings wirkt der felinen Urolithiasis (Harnsteinleiden der Katze) entgegen.

Folgende Mineralstoffe und/oder Spurenelemente werden in form ihrer vorgenannten Salze verwendet: Ca als CaCO₃, P als NaH₂PO₄·2H₂O, Mg als MgO, K als KCl, Na als NaCl, Fe als FeSO₄, Cu als CuSO₄·5H₂O, Zn als ZnCl₂, Mn als MnSO₄· 4H₂O, J als KJ, F als CaF₂, Se als Na₂SeO₄, Co als CoSO₄· 7H₂O, V als Na₃VO₄, Mo als Na₂MoO₄, Cr als K₂Cr₂O₇, Ni als NiSO₄ · 7H₂O, PB als PbSO₄, As als Na₂AsO₄ sowie Si als Na₂SiO₃.

Das Fluor führt zu einer verbesserten Zahn- und Knochenbildung und wirkt prophylaktisch gegen Karies. Das Molybdän als Spurenelement ist in lebenswichtigen Enzymen enthalten, die für Stoffwechselfunktionen unerläßlich sind (Xanthinoxidase). Gleiches gilt für das Vanadin (Lipidstoffwechsel), das Nickel(Bildung der Glycerin-3-phosphatdehydrogenase) und das Chrom(Verbesserung der Glukosetoleranz). Das Silizium verbessert die Bildung der Knorpelstruktur und des Bindegewebes, während Arsen und Blei das Wachstum und die Blutbildung fördern.

Das erfindungsgemäße Katzenfutterdressing enthält Vitamine, die teils in den einzelnen Nährkomponenten vorhanden sind, teils zum Ausgleich der physiologisch erforderlichen Mengen durch Zusätze in Form von Einzelvitaminen, Vitaminmischungen oder Mischungen aus Mineralstoffen, Spurenelementen und Vitaminen zudosiert werden müssen. Auch hier besteht ein enger Zusammenhang zwischen dem Tagesbedarf an Rohprotein/Kg Katze und den benötigten Mengen an Vitaminen, so daß diese physiologische Beziehung bei der Zusammensetzung des Dressings bereits berücksichtigt ist. Erfindungsgemäß kommen die Vitamine A, D₃, E, B₁, B₂,B₆, B₁₂, Biotin, Nicotinsäure, Panthothensäure und Folsäure zum Einsatz.

Das erfindungsgemäße Katzenfutterdressing enthält Extrakte von Valeria officinalis. Diese können wässrig oder ethanolisch in einer Konzentration des pflanzlichen Wirkstoffs von 5 bis 80% sein. Der Gehalt des Dressings an Extrakt richtet sich somit nach der darin enthaltenen Wirkstoffkonzentration. Erfindungsgemäß liegt diese Wirkstoffkonzentration in einem Bereich zwischen 0,5 bis 5 Gew.-%.

Als Konservierungsstoffe werden nur die gesetzlich zulässigen Produkte wie Na₂SO₃, Na₂S₂O₅, NaNO₂, Propionsäure und deren Alkalisalze, Sorbinsäure und deren Alkalisalze, Fumarsäure, Essigsäure, Milchsäure, Zitronensäure, Weinsäure, Formaldehyd sowie 1,2-Propandiol eingesetzt.

Als Antioxidantien kommen Gallate, Ascorbinsäure, Butylhydroxianisol und/oder Butylhydroxitoluol in Frage.

Wasser kann als Leitungswasser und/oder Brunnenwasser und/oder demineralisiertes Wasser eingesetzt werden.

Gegenstand der Erfindung ist ferner ein Verfahren zur Herstellung des vorab beschriebenen Katzenfutterdressings. Dieses erfindungsgemäße Verfahren zeichnet sich dadurch aus, daß man die erforderlichen Gewichtsmengen von Rohprotein, zuckerhaltigen Nährstoffen, Speiseölen mit einem hohen Linolsäuregehalt, Geschmacksstoffen und/oder Aromen, Mineralstoffen und/oder Spurenelementen sowie Taurin in der mit 1 bis 2%igen Überschuß erforderlichen Gewichtsmenge Wasser löst bzw. suspendiert, danach die Mischung bei einer Temperatur zwischen 120 bis 130°C 20 bis 25 Minuten sterilisiert, anschließend auf 50°C abkühlt, die in dem Valeria-officinalis-Extrakt suspendierten und/oder gelösten Vitamine, Antioxidantien und Konservierungsstoffe hinzumischt und das so erhaltene Dressing in verschließbare Behälter, die vorher nach bekannten Methoden sterilisiert wurden, einfüllt.

Als verschließbare Behälter werden Gläser, Büchsen, Plastikflaschen und/oder Tuben eingesetzt.

Die erfindungsgemäße Herstellung des Katzenfutterdressings ist gegenüber anderen bekannten Futtermitteln ökonomisch günstiger durch den Einsatz billigerer Rohstoffe.

Ein weiterer Gegenstand der Erfindung ist die Verwendung des vorab beschriebenen Katzenfutterdressings zur geschmacklichen Verfeinerung von Katzenfutter und sonstigen Nahrungsmitteln. Die Dressings sind bei Raumtemperatur viscos-halbflüssig und können in dieser Form anderen ballaststoffreichen Nahrungsmitteln wie Speiseresten, Gemüsen, Kartoffeln, Cerealien und Cerealienproduktion usw. entsprechend dem Alter, dem Gewicht und den Lebensumständen des Tieres gezielt zudosiert werden.

Das erfindungsgemäße Katzenfutterdressing ist für alle Rassen der Species felis domestica in der adulten, juvenilen, graviden und laktierenden Lebensphase geeignet. Es kann für die Ernährung wenig belasteter Tiere aber auch für Rekonvaleszenten als Aufbaufutter angewendet werden.

Das dosierte Dressing wird auf das Tierfutter geschüttet und untergemischt.

Nach Öffnen der Behälter sind die Dressings kühl zu lagern. Der Einsatz des Katzenfutterdressings ist vom Gehalt an Rohprotein abhängig. Die Dosierung des Katzenfutterdressings mittels Drehverschlußkappe oder Dosierlöffel ist so zu wählen, daß ca. 4,5 g Rohprotein/Kg Katze/Tag verfüttert werden.

Das erfindungsgemäße Katzenfutterdressing kann dem Tierfutter auch in konzentrierter Form zugemischt werden.

In den folgenden Tabellen ist der Proteinbedarf der Katze in den einzelnen Lebensphasen aufgeführt:

**Tabelle 1**

| Adulte Katze | |
|---|---|
| Lebendmasse der Katze kg | Rohprotein g |
| 3 | 14 |
| 4 | 18 |
| 5 | 22 |

**Tabelle 2**

| Gravide und laktierende Katze | | |
|---|---|---|
| Lebendmasse der Katze kg | Rohprotein g | |
| | Gravidität | Laktation |
| 3 | 20 | 46 |
| 4 | 25 | 60 |
| 5 | 31 | 73 |

**Tabelle 3**

| Wachsende Jungkatzen | | |
|---|---|---|
| Lebendmasse der Katze kg | Alter der Katze Wochen | Rohprotein g |
| 0,5 | 5 | 9 |
| 1,0 | 10 | 14 |
| 2,0 | 20 | 19 |
| 3,0 | 30 | 20 |
| 4,0 | 40 | 21 |
| 5,0 | 50 | 22 |

Die Erfindung wird an den folgenden Beispielen näher erläutert:

### Beispiel 1

Zusammensetzung für ein Katzenfutterdressing in g Bestandteile/Kg Dressing

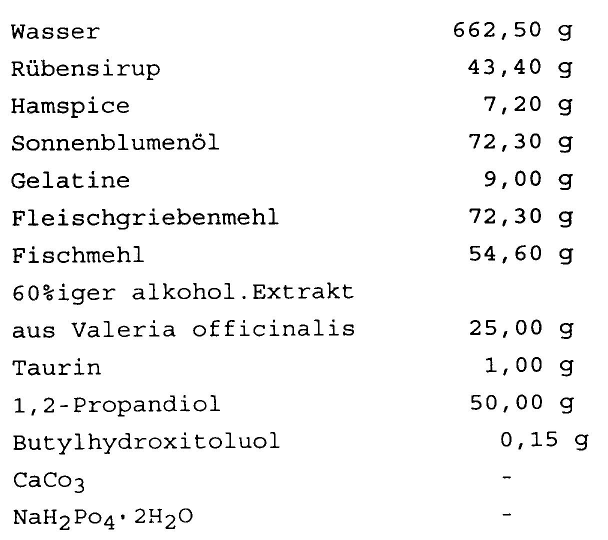

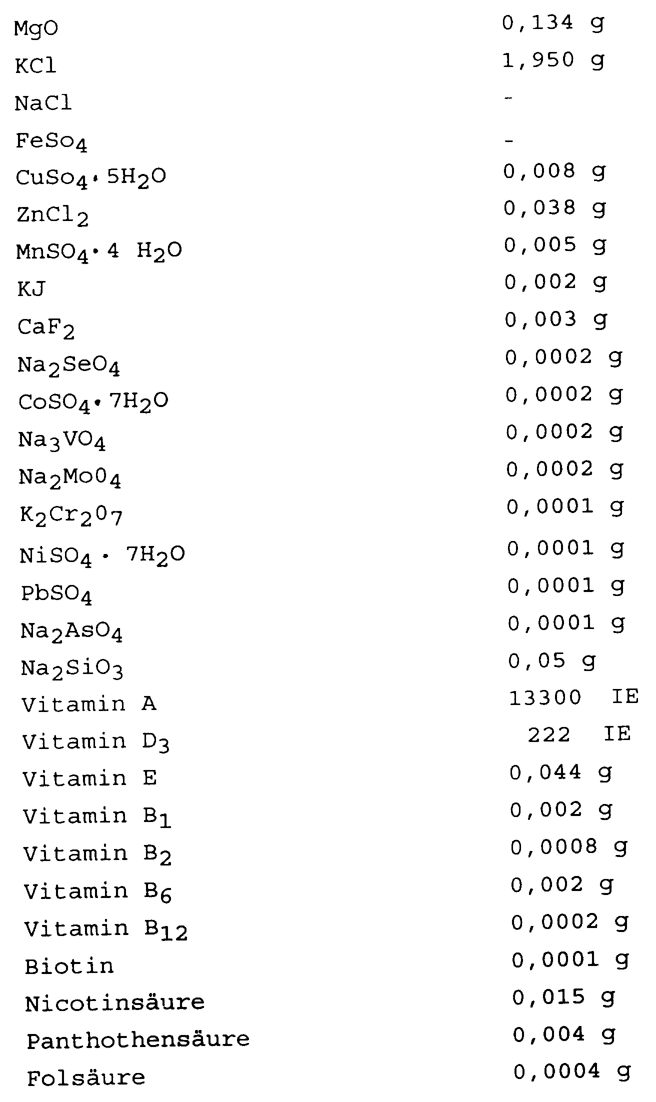

### Beispiel 2

### Herstellung eines Katzenfutterdressings

Folgende Ingredienzen werden nacheinander eingewogen und in 675,8 g Wasser eingetragen:
43,4 g Rübensirup
7,2 g Hamspice
72,3 g Sonnenblumenöl
9,0 g Gelatine
72,3 g Fleischgriebenmehl
54,6 g Fischmehl
1,0 g Taurin
0,134 g MgO
1,95 g KCl
0,008 g CuSO₄·5H₂O
0,038 g ZnCl₂
0,005 g MnSO₄·4 H₂O
0,002 g KJ
0,003 g CaF₂
0,0002 g Na₂SeO₄
0,0002 g CoSO₄·7H₂O
0,0002 g Na₂MoO₄
0,0001 g K₂Cr₂O₇
0,0001 g NiSO₄·7H₂O
0,0001 g PbSO₄
0,0001 g Na₃AsO₄
0,05 g Na₂SiO₃
Die erhaltene Mischung wird 20 Minuten bei einer Temperatur von 121°C im Dampfsterilisator erhitzt. Man läßt auf 50° C erkalten und versetzt unter Rühren mit einer Mischung der nachstehenden Komponenten:
50 g 1,2-Propandiol
25 g 60% alk. Extrakt aus Valeria officinalis
0,15 g Butylhydroxitoluol
0,044 g Vitamin E
0,002 g Vitamin B₁
0,0008 g Vitamin B₂
0,002 g Vitamin B₆
0,0002 g Vitamin B₁₂
0,0001 g Biotin
0,015 g Nicotinsäure
0,004 g Panthothensäure
0,0004 g Folsäure
13300 IE Vitamin A
222 IE Vitamin D₃
Die fertige Mischung des Katzenfutterdressings wird in vorher bei 121° C sterilisierte Schraubgläser gefüllt,die zu verschließen sind. Vor der Zugabe des Dressings zu ballaststoffreichen Nahrungsmitteln sind die Gläserinhalte vom Verbraucher zu schütteln.

### Beispiel 3

Anwendung des Katzenfutterdressings als Beifutterzusatz zu vollwertigem Katzenfutter. Das dosierte Dressing wird auf das Katzenfutter geschüttet und untergemischt.

### Beispiel 4

Anwendung des Katzenfutterdressings als Beifutterzusatz zu Speiseresten. Das dosierte Dressing wird auf die Speisereste geschüttet und untergemischt.

### Beispiel 5

Das Katzenfutterdressing wird in höherer Konzentration auf die Speisereste oder das Katzenfutter geschüttet und untergemischt.

## Patentansprüche

1. Katzenfutterdressing, dadurch gekennzeichnet, daß es 5 bis 20 Gew.-% Rohproteine, 2 bis 5 Gew.-% zuckerhaltige Nährstoffe, 2 bis 10 Gew-% Speiseöle mit einem hohen Linolsäuregehalt, 0,5 bis 1,5 Gew.-% Geschmacksstoffe und/oder Aromen, 0,1 bis 5 Gew.-% Mineralstoffe und/ oder Spurenelemente, 5000 bis 25000 IE Vitamin A und D₃ pro kg Dressing, 0,004 bis 0,2 Gew.-% weitere Vitamine, 0,5 bis 5 Gew.-% eines 5 bis 80%igen Ex-traktes aus Valeria officinalis, 0,05 bis 0,5 Gew.-% Taurin, 0,1 bis 5 Gew.-% Konservierungsstoffe, 0,01 bis 0,05 Gew.-% Antioxidantien und 47,750 bis 89,736 Gew.-% Wasser enthält.

2. Katzenfutterdressing, nach Anspruch 1, dadurch gekennzeichnet, daß es 13,59 Gew.-% Rohproteine, 4,34 Gew.-% zuckerhaltige Nährstoffe, 7,23 Gew.-% Speiseöle mit einem hohen Linolsäuregehalt, 0,72 Gew-% Geschmacksstoffe und/oder Aromen, 0,22 Gew-% Mineralstoffe und/oder Spurenelemente, 13300 IE Vitamin A pro Kg Dressing, 222 IE Vitamin D₃ pro kg Dressing, 0,007 Gew.-% weitere Vitamine, 2,5 Gew.-% eines 60%igen alkoholischen Extraktes aus Valeria officinalis, 0,1 Gew.-% Taurin, 5 Gew.-% Konservierungsstoffe, 0,015 Gew.-% Antioxidantien und 66,278 Gew.-% Wasser enthält.

3. Katzenfutterdressing nach Anspruch 1 oder 2, dadurch gekennzeichnet, daß es die Rohproteine in Form von Mehlen und/oder Pulvern und/oder Schroten und/oder Flüssigkeiten enthält.

4. Katzenfutterdressing nach Anspruch 3, dadurch gekennzeichnet, daß es als Rohproteine, Gelatine, Fleischgriebenmehl und Fischmehl enthält.

5. Katzenfutterdressing nach Anspruch 1 oder 2, dadurch gekennzeichnet, daß es als zuckerhaltige Nährstoffe Sirupe und/oder andere halbflüssige, wasserlösliche Hexosen bzw. Disaccharide aus Hexosen ohne oder mit geringem Galactoseanteil und/oder Roh- und Speisezucker enthält.

6. Katzenfutterdressing nach Anspruch 5, dadurch gekennzeichnet, daß es als zuckerhaltigen Nährstoff Rübensirup enthält.

7. Katzenfutterdressing nach Anspruch 1 oder 2, dadurch gekennzeichnet, daß die Speiseöle einen hohen Gehalt an essentiellen, ungesättigten Fettsäuren und geringe Anteile an langkettigen und mittelkettigen gesättigten Fettsäuren aufweisen.

8. Katzenfutterdressing nach Anspruch 7, dadurch gekennzeichnet, daß es als Speiseöl Sonnenblumenöl enthält.

9. Katzenfutterdressing nach Anspruch 1 oder 2, dadurch gekennzeichnet, daß die Geschmacksstoffe und/oder Aromen Glutaminsäure enthalten.

10. Katzenfutterdressing nach Anspruch 9, dadurch gekennzeichnet, daß es als Geschmacksstoff ein dickflüssiges Brühsuppenkonzentrat mit der Geschmacksnote Hamspice enthält.

11. Katzenfutterdressing nach Anspruch 1 oder 2, dadurch gekennzeichnet, daß es die Mineralstoffe und/oder Spurenelemente in Form löslicher und/oder unlöslicher Salze enthält.

12. Katzenfutterdressing nach Anspruch 11, dadurch gekennzeichnet, daß es als Mineralstoffe und/oder Spurenelemente Ca, P, Mg, K, Na, Fe, Cu, Zn, Mn, J, F, Se, Co, V, Mo, Cr, Ni, Pb, As und Si enthält.

13. Katzenfutterdressing nach Anspruch 1 oder 2, dadurch gekennzeichnet, daß es die Vitamine A, D₃, E, B₁, B₂, B₆, B₁₂, Biotin, Nicotinsäure, Panthothensäure und Folsäure enthält.

14. Katzenfutterdressing nach Anspruch 1 oder 2, dadurch gekennzeichnet, daß es als Konservierungsstoff 1,2-Propandiol enthält.

15. Katzenfutterdressing nach Anspruch 1 oder 2, dadurch gekennzeichnet, daß es als Antioxidantien Butylhydroxitoluol enthält.

16. Katzenfutterdressing nach Anspruch 1 oder 2, dadurch gekennzeichnet, daß es als Wasser Leitungswasser und/oder Brunnenwasser und/oder demineralisiertes Wasser enthält.

17. Verfahren zur Herstellung eines Katzenfutterdressings gemäß Anspruch 1, dadurch gekennzeichnet, daß man die erforderlichen Gewichtsmengen von Rohprotein, zuckerhaltigen Nährstoffen, Speiseölen mit einem hohen Linolsäuregehalt, Geschmacksstoffen und/oder Aromen, Mineralstoffen und/oder Spurenelementen sowie Taurin in der mit 1 bis 2%igen Überschuß erforderlichen Gewichtsmenge Wasser löst bzw. suspendiert, danach die Mischung bei einer Temperatur zwischen 120° bis 130°C 20 bis 25 Minuten sterilisiert, anschließend auf 50°C abkühlt, die in dem Valeria-officinalis-Extrakt suspendierten und/oder gelösten Vitamine, Antioxidantien und Konservierungsstoffe hinzumischt und das so erhaltene Dressing in verschließbare Behälter, die vorher nach bekannten Methoden sterilisiert wurden, einfüllt.

18. Verwendung des Katzenfutterdressings zur geschmacklichen Verfeinerung von Katzenfutter und sonstigen Nahrungsmitteln.
